# EUROPÄISCHE PATENTSCHRIFT

(11) **EP 3 243 016 B1**
(45) Veröffentlichungstag und Bekanntmachung des Hinweises auf die Patenterteilung: **26.02.2020**
(21) Anmeldenummer: 16700296.3
(22) Anmeldetag: 08.01.2016
(51) Int. Cl.: F16J 15/3284, F16J 15/3268

(54) **DICHTRING**
SEALING RING
BAGUE D'ÉTANCHÉITÉ

(30) Priorität: 08.01.2015 DE 202015100048 U
(43) Veröffentlichungstag der Anmeldung: 15.11.2017
(73) Patentinhaber: KRONES AG, 93073 Neutraubling (DE)
(72) Erfinder: BRAUN, Franz, 93073 Neutraubling (DE); SCHWARZFISCHER, Peter, 93073 Neutraubling (DE)
(74) Vertreter: Nordmeyer, Philipp Werner
(86) Internationale Anmeldenummer: PCT/EP2016/050279
(87) Internationale Veröffentlichungsnummer: WO 2016/110569

(56) Entgegenhaltungen:
- US-A- 2 549 818
- US-A- 4 415 166
- US-A1- 2007 013 229

## Beschreibung

### Technisches Gebiet

Die vorliegende Erfindung betrifft einen Dichtring zur Abdichtung eines sich gegenüber einem ersten Bauteil drehenden zweiten Bauteils, bevorzugt zur Abdichtung eines Verteilkanals eines Mediendrehverteilers in einer Getränkeabfüllanlage.

### Stand der Technik

Bei Rundläufermaschinen im Bereich der Getränkeabfüllung, beispielsweise bei Rundläuferfüllern, Rundläufersterilisatoren oder Rundläuferrinsern, ist es notwendig, von stehenden Anlagenkomponenten, beispielsweise einem Maschinengestell, Fluid auf gegenüber den stehenden Anlagenkomponenten rotierende Anlagenkomponenten zu übertragen. Dies wird beispielsweise über einen so genannten Mediendrehverteiler erreicht, welcher eine stehende Welle an dem Maschinengestell aufweist, auf welcher eine sich drehende Hülse bereitgestellt wird. Zur Ausbildung unterschiedlicher Verteilspuren sind entweder in der Welle oder in der Hülse oder in beiden umlaufende Verteilspuren ausgebildet, welche gegenüber der Umgebung und gegenüber der angrenzenden Verteilspur über Dichtringe abgedichtet sind.

Es sind unterschiedliche Dichtungsarten bekannt, beispielsweise Dichtungen, bei welchen ein Dichtelement mittels eines Elastomers von einem ersten Bauteil, beispielsweise einer Hülse eines Mediendrehverteilers, auf ein zweites Bauteil, beispielsweise eine stehende Welle des Mediendrehverteilers, hin vorgespannt ist. Hierbei wird bevorzugt sowohl ein Elastomerteil zur Ausbildung der Vorspannung bereitgestellt, als auch ein radial innerhalb des Elastomers angeordnetes Verschleißprofil vorgesehen, wobei das Verschleißprofil dann an der stehenden Welle abdichtend zur Anlage kommt. Entsprechend nimmt das erste Bauteil in Form der rotierenden Hülse den Dichtring mit, wobei der Elastomerteil, welcher die Vorspannung erzeugt, in einer Gehäusenut in der Hülse aufgenommen ist. Die Gehäusenut wird zum Einlegen des Dichtrings üblicherweise geöffnet, indem ein Teil des die Gehäusenut ausbildenden Bauteils in axialer Richtung entfernt wird, dann der Dichtring eingelegt und daraufhin die Gehäusenut durch das Zusammenfügen der vorher in axialer Richtung voneinander entfernten Teile des Bauteils wieder geschlossen wird.

Das Verschleißprofil hingegen liegt an der stehenden Maschinenwelle abdichtend an, so dass auf diese Weise eine Abdichtung bereitgestellt werden kann. Das Verschleißprofil nimmt entsprechend die Relativbewegung zwischen dem Dichtring und der stehenden Maschinenwelle auf, so dass ein Verschleiß nur am Verschleißprofil auftritt. Um den Verschleiß hier möglichst gering zu halten, ist es bekannt, das Verschleißprofil aus einem entsprechenden verschleißbeständigen und reibungsarmen Material herzustellen, beispielsweise aus PTFE oder einem PTFE-Compound.

Es ist bekannt, den Dichtring in einer Gehäusenut in einem der Bauteile aufzunehmen, beispielsweise in der Hülse des Mediendrehverteilers. Um eine Relativbewegung des Dichtrings gegenüber der Gehäusenut zu vermeiden und auf diese Weise einen Verschleiß und Abrieb des Dichtungsgrundkörpers zu verhindern, ist bekannt, den Dichtring beispielsweise mittels eines Stifts oder einer Verschraubung, welche in eine Bohrung im Dichtring eingreift, formschlüssig und damit drehfest in der Gehäusenut zu halten.

Aus der DE 10 2012 110 752 A1 sind eine Vorrichtung und ein Verfahren zum Abdichten eines Maschinenteils gegenüber einem zweiten Maschinenteil bekannt, bei welchem ein Dichtring mit einem Vorspannelement gezeigt ist.

Aus der DE 103 16 147 B3 ist eine Dichtung für einen Schwenkmotor bekannt, bei welcher ein Dichtring in einer Gehäusenut aufgenommen ist.

Die US 2007/0013229 A1 beschreibt eine Kolbendichtung mit Arretierfingern.

### Darstellung der Erfindung

Ausgehend von dem bekannten Stand der Technik ist es eine Aufgabe der vorliegenden Erfindung, einen Dichtring zum Abdichten eines ersten Bauteils gegenüber einem sich gegenüber dem ersten Bauteil drehenden zweiten Bauteil zu verbessern.

Diese Aufgabe wird durch einen Dichtring mit den Merkmalen des Anspruchs 1 gelöst. Vorteilhafte Weiterbildungen ergeben sich aus den Unteransprüchen.

Entsprechend wird ein Dichtring zur Abdichtung eines sich gegenüber einem ersten Bauteil drehenden zweiten Bauteils, bevorzugt zur Abdichtung eines Verteilkanals eines Mediendrehverteilers in einer Getränkeabfüllanlage, vorgeschlagen, umfassend einen ringförmigen Dichtungsgrundkörper zur Aufnahme an dem ersten Bauteil und ein radial innerhalb des Dichtungsgrundkörpers angeordnetes Verschleißprofil zur abdichtenden Anlage an dem zweiten Bauteil. Erfindungsgemäß weist der Dichtungsgrundkörper mindestens einen Bereich reduzierten Radius auf, um eine Verformung des Dichtungsgrundkörpers bei der Montage an dem ersten Bauteil zu ermöglichen.

Die Abdichtung eignet sich besonders bevorzugt zur Abdichtung eines Gehäuses gegenüber einer sich drehenden Welle. Beispielsweise kann hier eine Welle eines Mediendrehverteilers in einer Getränkeabfüllanlage gegenüber der Mediendrehverteilerhülse abgedichtet werden. In einer weiteren bevorzugten Ausbildung kann auch der Durchgang der Welle eines Mediendrehverteilers durch ein Isolatorgehäuse in einer aseptischen Getränkeabfüllanlage abgedichtet werden.

Dadurch, dass der Dichtungsgrundkörper mindestens einen Bereich reduzierten Radius aufweist um eine Verformung des Dichtungsgrundkörpers bei der Montage zu unterstützen, wird es möglich, den Dichtring auch in geschlossene Gehäusenuten einzusetzen, ohne dass die Gehäusenut hierfür geöffnet werden müsste. Dies ist insbesondere beim Einsetzen einer Vielzahl solcher Dichtringe in einen Medienverteiler von Bedeutung, da so der Aufwand zum Austauschen der Dichtringe reduziert werden kann und einer oder mehrere Dichtringe in einem Gehäuse montiert werden können und damit die Ausfallzeiten einer Getränkeabfüllanlage reduziert werden können.

Durch das Bereitstellen eines Bereichs reduzierten Radius des Dichtungsgrundkörpers kann eine erhöhte Flexibilität des Dichtrings und insbesondere des Dichtungsgrundkörpers bezüglich einer Verformung in der durch den Dichtring definierten Ebene bereitgestellt werden.

Bevorzugt werden an dem Dichtungsgrundkörper mehrere Bereiche reduzierten Radius bereitgestellt, welche besonders bevorzugt nur in einem Abschnitt beziehungsweise einem Segment des Dichtungsgrundkörpers bereitgestellt werden. Mit anderen Worten liegen die Bereiche reduzierten Radius nur in einem Teil des Dichtungsgrundkörpers - beispielsweise nur auf einer Hälfte oder einem Drittel des Umfangs des Dichtungsgrundkörpers. In den anderen Bereichen beziehungsweise Abschnitten des Dichtungsgrundkörpers hingegen werden keine oder nur eine reduzierte Anzahl an Bereichen reduzierten Radius bereitgestellt. Entsprechend kann die Stabilität und Integrität des Dichtrings aufrechterhalten bleiben und ein hoher Anpressdruck, welcher von dem Dichtungsgrundkörper ausgeübt wird, auf das Verschleißprofil aufgebaut werden. Gleichzeitig kann aber eine verbesserte Flexibilität des Dichtungsrings nur in dem Bereich, in dem die mehreren Bereiche reduzierten Radius bereitgestellt sind, erreicht werden, so dass der Dichtungsring einfach montiert und ausgetauscht werden kann. Für die Montage oder den Austausch ist es nicht notwendig, dass die Gehäusenut durch Auseinandernehmen von die Gehäusenut definierenden Teilen des jeweiligen Bauteils geöffnet wird.

Die Bereiche reduzierten Radius sind auf der Außenseite des Dichtungsgrundkörpers, also im Bereich des äußeren Umfanges des Dichtungskörpers vorgesehen.

Unter einem Radius wird hier der Abstand zwischen der durch die Drehachse des Dichtrings definierten Mitte des Dichtrings zu dem jeweils äußersten Umfang des Dichtrings beziehungsweise des Dichtungsgrundkörpers verstanden. In den Bereichen reduzierten Radius ist entsprechend der äußerste Umfang gegenüber den daneben liegenden Bereichen zur Mitte des Dichtrings hin eingezogen.

Der Bereich reduzierten Radius ist dadurch ausgebildet, dass der Dichtungsgrundkörper in diesem Bereich in Radiusrichtung schmaler oder dünner ausgeprägt ist. Die Materialstärke des Dichtungsgrundkörpers in radialer Richtung ist entsprechend geringer, als in den benachbarten Bereichen.

Bevorzugt sind in einem Verformungsbereich eine höhere Anzahl an Bereichen reduzierten Radius um den Umfang des Dichtungsgrundkörpers herum angeordnet, als außerhalb des Verformungsbereiches. Auf diese Weise lässt sich die strukturelle Integrität des Dichtrings bei verbesserten Verformungseigenschaften aufrechterhalten.

Besonders bevorzugt weist der Dichtungsgrundkörper an seinem Umfang und radial nach außen gerichtet einen Steg auf, welcher zur Aufnahme in einer entsprechend komplementären Gehäusenut in dem jeweiligen Bauteil ausgebildet ist. Unter einem Steg wird hier ein Teil des Dichtungsgrundkörpers verstanden, der in Axialrichtung des Dichtrings eine geringere Erstreckung oder Stärke aufweist, als die radial weiter nach innen liegenden Bereiche des Dichtungsgrundkörpers. Mittels des Steges kann eine weiter verbesserte Fixierung des Dichtrings, insbesondere in Axialrichtung, in dem Bauteil beziehungsweise der Gehäusenut des Bauteils erreicht werden. Der Dichtungsgrundkörper weist entsprechend einen radial nach außen weisenden und den Dichtungsgrundkörper im Wesentlichen umschließenden Steg auf, wobei die Bereiche reduzierten Radius in den Steg eingebracht sind. Damit kann der Dichtring besonders vorteilhaft in einer Gehäusenut, insbesondere einer geschlossenen Gehäusenut, aufgenommen werden.

Die Bereiche reduzierten Radius können nur in dem sich nach außen erstreckenden Steg vorgesehen sein. Ein Steg erhöht an sich die Steifigkeit gegen Verformung des Dichtrings erheblich. Durch den Steg erhält der Dichtungsgrundkörper quasi ein T-Profil, welches besonders steif gegen das Verformen nach innen ist. Durch das Einbringen der Bereiche reduzierten Radius, welche beispielsweise als Aussparungen oder ausgeschnittene Segmente in dem Steg vorgesehen sein können, wird entsprechend die Flexibilität des Dichtungsgrundkörpers beziehungsweise des gesamten Dichtrings erhöht, um auf diese Weise eine vereinfachte Montage erreichen zu können. Die Bereiche reduzierten Radius sind dabei bevorzugt nur in einem Segment beziehungsweise Segmentabschnitt des Dichtrings vorgesehen, beispielsweise verteilt über einen Winkel von 180° oder kleiner. Bei der Montage eines Dichtrings in eine geschlossene Gehäusenut wird dann zunächst der nicht mit den Bereichen reduzierten Radius vorgesehene Bereich in den dafür vorgesehenen Bereich der geschlossenen Gehäusenut eingesetzt, und der gegenüberliegende Bereich, welcher eine erhöhte Anzahl an Bereichen reduzierten Radius aufweist, entsprechend zur Mitte des Dichtrings hin verformt, um dann ebenfalls in den Bereich der geschlossenen Gehäusenut eingesetzt werden zu können.

Bevorzugt weist das Verschleißprofil einen oberen Profilbereich, einen unteren Profilbereich und dazwischen einen Mittelkanal auf, welcher bei Anlage des Verschleißprofils an dem zweiten Bauteil durch den oberen Profilbereich und den unteren Profilbereich fluiddicht abgedichtet ist. Besonders bevorzugt ist dabei der Mittelkanal über mindestens eine Spül- und Leckagebohrung, welche sich im Wesentlichen radial durch das Verschleißprofil und den Dichtungsgrundkörper hindurcherstreckt, kontaktierbar. Ist keine Spül- oder Leckagebohrung im Verschleißprofil angeordnet, kann die Versorgung des Mittelkanals alternativ auch durch eine gegenüber einem Gehäuse abzudichtenden Welle erfolgen. Die Leckagebohrung im Verschleißprofil kann in einem Bereich mit reduziertem Radius angeordnet sein oder in einem Bereich ohne reduzierten Radius angeordnet sein.

Um eine eineindeutige Orientierung des Dichtrings in der Montagenut sicherzustellen, weisen die Bereiche reduzierten Radius in Umfangsrichtung bevorzugt eine unterschiedliche Erstreckung auf. Alternativ oder zusätzlich können zur Erreichung der eineindeutigen Orientierung auch die hervorstehenden Elemente zwischen den Bereichen reduzierten Radius in Umfangsrichtung eine unterschiedliche Erstreckung aufweisen.

In den Bereich reduzierten Radius kann bevorzugt auch ein Sicherungselement des ersten Bauteils eingreifen, um entsprechend eine Verdrehsicherung beziehungsweise ein Verschieben des Dichtrings innerhalb der Gehäusenut zu verhindern. Ein Formschluss kann dabei insbesondere an den Flanken beziehungsweise den Übergängen von den Bereichen reduzierten Radius zu den Bereichen nicht reduzierten Radius stattfinden.

Der Bereich reduzierten Radius bietet entsprechend die Möglichkeit, eine Verdrehsicherung zu implementieren und ohne weitere bauliche Maßnahmen am Dichtring bereitzustellen. Der Bereich reduzierten Radius hat dann eine Doppelfunktion, nämlich zum einen die Funktion dahingehend, dass die Flexibilität des Dichtrings erhöht wird, um die Montage zu erleichtern, und zum anderen die Verdrehsicherung bereitzustellen beziehungsweise zu ermöglichen.

Bevorzugt ist ein Element zur Verdrehsicherung auch in der geschlossenen Gehäusenut des Bauteils vorgesehen, beispielsweise in Form eines hervorstehenden Elementes, welches eine komplementäre Form zu der Form des Bereichs reduzierten Radius aufweist. Entsprechend passt das hervorstehende Element in den Bereich reduzierten Radius hinein, derart, dass auf diese Weise eine Verdrehsicherung bereits durch das einfache Einsetzen des Dichtrings erreicht werden kann. Das hervorstehende Element kann vom Dichtring lösbar angebracht sein.

In einer besonders bevorzugten Ausführungsform ist für jeden Bereich reduzierten Radius ein solches hervorstehendes Element vorgesehen, so dass der in die Gehäusenut eingesetzte Dichtringgrundkörper in radialer Richtung vollständig an der Gehäusenut anliegt und von dieser abgestützt wird. Weiterhin kann auf diese Weise auch eine sehr zuverlässige Verdrehsicherung bereitgestellt werden, welche bei Beanspruchung nicht in einer Längung des Materials oder in einer elastischen Verschiebung des Dichtrings resultiert. So kann die Lebensdauer des Dichtrings verbessert werden.

Weiterhin wird ein Mediendrehverteiler mit einem feststehenden Bauteil und einem sich gegenüber dem feststehenden Bauteil drehenden Bauteil vorgeschlagen, wobei an dem einen Bauteil eine geschlossene Gehäusenut zur Aufnahme eines Dichtrings nach einem der vorstehenden Ansprüche vorgesehen ist. Erfindungsgemäß weist die Gehäusenut eine zur Form des Dichtungsgrundkörpers komplementäre Form auf. Die komplementäre Form weist entsprechend radial nach innen vorstehende Elemente an den Positionen auf, an welchen die Bereiche reduzierten Radius des Dichtelements vorgesehen sind.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Draufsicht auf einen Dichtring in einem ersten Ausführungsbeispiel;
- Figur 2: eine schematische perspektivische Ansicht des Dichtrings aus Figur 1;
- Figur 3: eine schematische Seitenansicht des Dichtrings der Figuren 1 und 2; und
- Figur 4: eine schematische Seitenansicht eines in ein Gehäuse eingebauten Dichtrings.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf die wiederholte Beschreibung dieser Elemente in der nachfolgenden Beschreibung teilweise verzichtet.

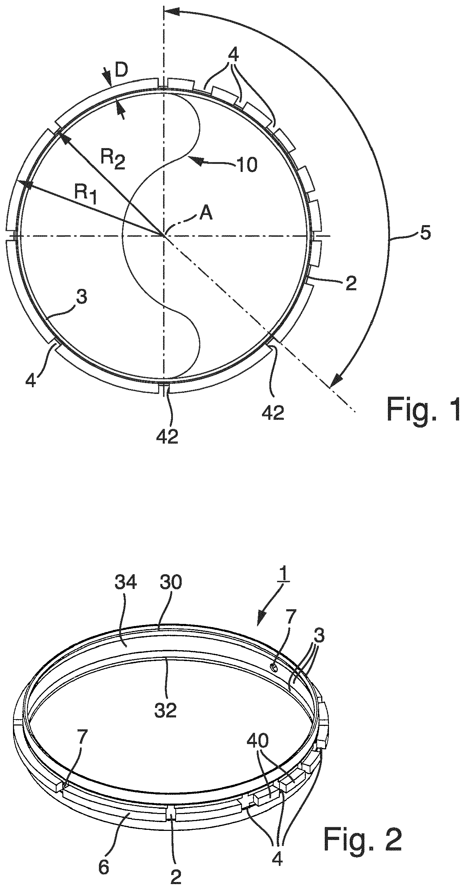

In den Figuren 1 bis 3 ist ein Dichtring 1 in einem Ausführungsbeispiel in einer schematischen Draufsicht, einer schematischen Seitenansicht und einer schematischen perspektivischen Ansicht gezeigt. Der Dichtring 1 weist einen ringförmigen Dichtungsgrundkörper 2 und ein radial innerhalb des Dichtungsgrundkörpers 2 vorgesehenes Verschleißprofil 3 auf. Der Dichtungsgrundkörper 2 ist dazu ausgebildet, das Verschleißprofil 3 zu halten und eine radiale Vorspannkraft auf das Verschleißprofil 3 aufzubringen. Der Dichtungsgrundköper 2 ist daher bevorzugt elastisch, um die Vorspannung aufbringen zu können und um dafür zu sorgen, dass der Dichtring 1 zuverlässig zwischen den gegeneinander abzudichtenden Bauteilen verspannt ist. Alternativ und besonders bevorzugt kann die Vorspannkraft auch durch zusätzliche Vorspannelemente (nicht gezeigt) aufgebracht und/oder verstärkt werden. In einer vorteilhaften Weiterbildung weist der Dichtungsgrundkörper 2 ein Schlauchprofil auf, mittels welchem eine Vorspannung aktiv durch Beaufschlagung des Schlauchs mit einem Vorspannfluid beeinflusst werden kann.

Wie sich aus Figur 2, welche eine perspektivische schematische Ansicht des Dichtrings 1 zeigt, ergibt, weist das Verschleißprofil 3 einen oberen Profilbereich 30 und einen unteren Profilbereich 32 auf, welche zwischen sich ein Mittelkanal 34 ausbilden, wenn das Verschleißprofil 3 an einer in dem Dichtring 1 aufgenommenen Welle beziehungsweise einem anderen rotationssymmetrischen Bauteil anliegt. Das Verschleißprofil 3 ist aus einem verschleißarmen Material ausgebildet, beispielsweise PTFE.

Der Dichtring 1 dient zur Abdichtung eines ersten Bauteils, in welchem der Dichtring 1 mit seinem Dichtungsgrundkörper 2 aufgenommen ist, gegenüber einem drehbar gegenüber dem ersten Bauteil angeordneten zweiten Bauteil. Beispielsweise kann der Dichtring 1 mit seinem Dichtungsgrundkörper 2 in einer Gehäusenut einer rotierenden Hülse aufgenommen sein und in dem Dichtring 1 eine stehende Welle eines Mediendrehverteilers aufgenommen sein, derart, dass der Dichtring 1 die stehende Welle gegenüber der rotierenden Hülse abdichtet.

Der Dichtring 1 und insbesondere der Dichtungsgrundkörper 2 weisen Bereiche mit einem reduzierten Radius 4 auf, welche in dem gezeigten Ausführungsbeispiel in den Figuren 1 bis 3 in Form von Materialaussparungen beziehungsweise Materialausschnitten am Umfang des Dichtungsgrundkörpers 4 bereitgestellt werden.

Der Radius des Dichtrings ist in der Figur 1 als Radius R₁ gezeigt. Er erstreckt sich von der Mitte A, die durch die Drehachse des Dichtrings 1 definiert ist, aus und erstreckt sich radial bis zum äußersten Bereich des Dichtungsgrundkörpers 2. Eine Vielzahl von Bereichen reduzierten Radius 4 mit einem Radius R₂ ist vorgesehen, welche entsprechend jeweils eine Verringerung der in Radialrichtung betrachteten Dicke D des Dichtrings 1 bewirken und welche entsprechend eine Flexibilität des Dichtrings 1 in der durch den Dichtring definierten Ebene auf die Mitte A des Dichtrings 1 hin ermöglichen.

Schematisch ist ein verformter Zustand des Dichtrings 1 beim Bezugszeichen 10 gezeigt. Dabei ist der auf der rechten Seite in Figur 1 gezeigte Bereich des Dichtrings 1 zur Mitte A hin eingedrückt. Auf diese Weise kann eine Installation beziehungsweise Montage des Dichtrings 1 in einer geschlossenen Gehäusenut in dem den Dichtring 1 tragenden Bauteil vereinfacht werden, da der auf der linken Seite in Figur 1 gezeigte Abschnitt des Dichtrings 1 zunächst in dem dafür vorgesehenen Abschnitt der geschlossenen Gehäusenut eingesetzt werden kann, wobei gleichzeitig der Dichtring 1, so wie beim Bezugszeichen 10 gezeigt, verformt ist, um dann nach einer erneuten Expansion des Dichtrings in die in Figur 1 gezeigte ursprüngliche Form ein vollständiges Einsetzen des Dichtrings in die geschlossene Gehäusenut zu erreichen.

Die Bereiche reduzierten Radius 4 dienen entsprechend dazu, den Dichtring in zumindest einem vorgesehenen Verformungsbereich 5 einfach und zuverlässig verformen zu können und entsprechend eine Montage des Dichtrings 1 zu erleichtern.

Der Dichtring 1 weist, wie besonders gut aus der Figur 2 zu erkennen ist, an dem Dichtungsgrundkörper 2 einen umlaufenden Steg 6 auf, welcher an seinem äußeren Umfang den Radius R₁ des Dichtrings 1 definiert, und in welchen die Bereiche reduzierten Radius 4 des Dichtungsgrundkörpers 2 eingebracht sind. Durch die Bereiche reduzierten Radius 4 sind entsprechend in den Bereichen, in welchen der Steg 6 nicht in seinem Radius reduziert ist, hervorstehende Elemente 40 vorgesehen, welche die Struktur des ursprünglichen Steges 6 aufweisen und welche entsprechend radial nach außen hin vorstehen.

In die Bereiche reduzierten Radius 4 kann bei der Montage in dem den Dichtring 1 aufnehmenden Bauteil auch eine Verdrehsicherung angebracht werden, welche entsprechend in den Bereich reduzierten Radius eingreift. Die Verdrehsicherung kann dabei an den Flanken 42, welche durch die Übergänge von den Bereichen reduzierten Radius 4 auf die Bereiche mit regulärem Radius gebildet werden, angreifen.

Der Steg 6 sowie der Dichtungsgrundkörper 2 sind bevorzugt einstückig ausgebildet und aus dem gleichen Material hergestellt.

Der Steg 6 weist in Axialrichtung, also in einer Richtung senkrecht zur durch den Dichtring 1 ausgebildeten Ebene, eine geringere Höhe H_{S} auf, als der Dichtring 1, der einen Höhe H_{D} aufweist. Entsprechend ist der Steg schmal und kann auf diese Weise gut in einer entsprechend ausgebildeten Gehäusenut aufgenommen werden. Da, je nach Ausführungsform, der verbleibende Dichtungsgrundkörper 2 eine größere Dicke aufweist, liegt er entweder ebenfalls in einer entsprechend geformten Gehäusenut in dem Bauteil, oder aber er liegt radial an einer Bauteilwand an. Auf diese Weise formt der Dichtungsgrundkörper 2 ein T-förmiges Profil aus, welches an sich recht starr gegen Verformung ist. Durch das Einbringen der Bereiche reduzierten Radius 4 wird hingegen eine Verformung wieder einfach möglich, um ein Einsetzen des Dichtrings 1 in eine Montagenut zu unterstützen.

In dem Bereich des Dichtungsgrundkörpers 2, welcher auch den Steg 6 umfasst, kann ein Vorspannelement vorgesehen sein, beispielsweise dadurch, dass der Dichtungsgrundkörper 2 und der Steg 6 aus einem Elastomermaterial ausgebildet sind, welches eine entsprechende Vorspannung bereitstellt. Der Dichtungsgrundkörper 2 und/oder der Steg 6 kann aber auch mit einem aktiven Vorspannelement, beispielsweise in Form eines aufblasbaren Schlauches, welcher mit einem entsprechenden Fluid beaufschlagt werden kann und auf diese Weise eine variable Vorspannung bereitstellt, versehen sein.

Der Verformungsbereich 5 erstreckt sich bevorzugt maximal über die Hälfte des Winkelbereichs des Dichtrings 1 und ist bevorzugt, so wie in dem in Figur 1 gezeigten Ausführungsbeispiel in einem kleineren Winkelbereich vorgesehen, also beispielsweise in einem Winkelbereich von 90° oder 120°.

Der Dichtring 1 weist an seinem äußeren Umfang bevorzugt weitere Bereiche reduzierten Radius 4 auf, welche nicht im Verformungsbereich 5 angeordnet sind, sondern in dem übrigen Bereich vorliegen. Diese Bereiche reduzierten Radius 4 können hier zum einen ebenfalls dazu dienen, eine Verdrehsicherung bereitstellen, oder aber dienen auch in diesen Bereichen der Unterstützung einer leichten Verformbarkeit, um eine Montage und Demontage des Dichtrings 1 weiter zu vereinfachen.

Dadurch, dass ein Verformungsbereich 5 vorgesehen ist, der sich nicht über den gesamten Umfang des Dichtrings 1 hinweg erstreckt, sondern nur in einem vorgegebenen Abschnitt vorgesehen ist und in den anderen Bereichen des Dichtrings 1 keine oder nur eine geringere Anzahl an Bereichen reduzierten Radius 4 vorgesehen ist, kann auch eine eineindeutige Orientierung des Dichtrings 1 in einer entsprechend dazu komplementär ausgeführten Gehäusenut im Gehäuse erreicht werden.

Dies ist insbesondere dann von Bedeutung, wenn durch den Dichtring 1 hindurch, so wie beispielsweise in Figur 2 gezeigt, zusätzlich zu den Bereichen reduzierten Radius 4 auch Spül- und Leckagebohrungen 7 vorgesehen sind, mittels welchen ein Mittelkanal 34 zwischen dem oberen Profilbereich 30 und dem unteren Profilbereich 32 fluidisch kontaktiert werden kann. Entsprechend kann im eingebauten Zustand des Dichtrings 1 über die Spül- und Leckagebohrungen 7 der zwischen dem oberen Profilbereich 30 und dem unteren Profilbereich 32 ausgebildete Mittelkanal 34 kontaktiert werden, derart, dass zum einen eine Reinigung dadurch möglich wird, dass ein Spülmedium durch den Mittelkanal 34 hindurchgespült wird, um beispielsweise Abrieb oder unbeabsichtigt hindurchgetretene Produktreste herauszuspülen. Zum anderen kann während des Produktionsbetriebes einer Getränkeabfüllanlage über die Spül- und Leckagebohrungen 7, beispielsweise durch das Anlegen eines Vakuums, die Dichtwirkung des oberen Profils 30 und des unteren Profils 32 verbessert werden und über eine Überwachung des Druckes eine eventuelle Leckage detektiert werden. Ebenso kann durch die Spül- und Leckagebohrungen 7 auch ein Sperrmedium wie beispielsweise Dampf oder Dampfkondensat eingebracht werden, wozu die Spül- und Leckagebohrungen 7 an eine nicht gezeigte Sperrmedienquelle anschließbar sind.

Die Bereiche reduzierten Radius 4 finden besonders bevorzugt in der jeweiligen Aufnahmenut einen komplementären Gegenpart, derart, dass im Bereich des reduzierten Radius entsprechend in der Montagenut ebenfalls ein Bereich reduzierten Nutradius vorgesehen ist, welcher komplementär zu dem Dichtring 1 beziehungsweise der Umfangskontur des Dichtrings 1 ausgebildet ist. Mit anderen Worten greifen in die Bereiche reduzierten Radius 4 dazu komplementäre Nutbereiche der Montagenut ein. Hierüber lässt sich zum einen eine sehr zuverlässige Verdrehsicherung des Dichtrings 1 erreichen, was der Dauerhaltbarkeit des Dichtrings 1 zugutekommt, da eine Rotationsbewegung des Dichtrings in der Montagenut stark reduziert wird beziehungsweise vollständig unterbunden werden kann.

Weiterhin kann beim Vorliegen eines dedizierten Verformungsbereiches 5, in welchem in einem vorgegebenen Winkelabschnitt eine höhere Anzahl an Bereichen reduzierten Radius 4 vorliegt, gegenüber einem anderen Abschnitt des Dichtrings 1, in welchem eine geringere Anzahl beziehungsweise keine Bereiche reduzierten Radius 4 vorliegen, quasi eine Schlüssel/Schloss-Situation erreicht werden, in welcher sich der Dichtring nur in einer einzigen Orientierung vollständig in die entsprechende Aufnahmenut beziehungsweise Montagenut einbringen lässt. Damit wird eine Kontaktierung der Spül-Leckagebohrung 7 einfach und zuverlässig möglich.

Weiterhin lässt sich darüber, dass die Form der Aufnahmenut komplementär zu der Gestaltung des Dichtungsgrundkörpers 2 umfassend den Steg 6 des Dichtrings 1, ausgebildet ist, erreichen, dass der Dichtring 1 um seinen gesamten Umfang herum jeweils radial in der Gehäusenut abgestützt ist, so dass die Dichtwirkung zuverlässig erreicht wird, da die Vorspannung auf das Verschleißprofil 3, welches die Abdichtung gegenüber dem im Dichtring 1 aufgenommenen Bauteil erreicht, um den gesamten Umfang des Dichtrings 1 herum gleichmäßig aufgebracht wird.

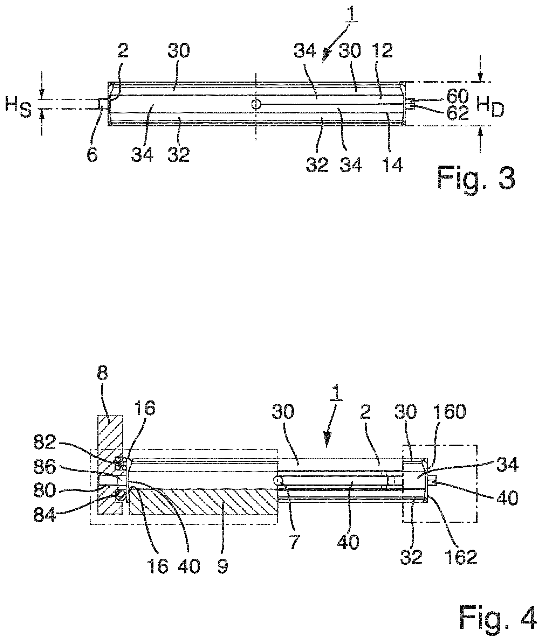

In Figur 3 sind zwei unterschiedliche Ausprägungen eines Dichtrings 1 gezeigt, wobei auf der linken Seite der Figur der Dichtring 1 einstückig mit dem oberen Profilbereich 30, dem unteren Profilbereich 32 sowie dem Mittelkanal 34 ausgebildet ist, und auch der Steg 6 einstückig am Dichtungsgrundkörper 2 vorgesehen ist.

Auf der rechten Seite der Figur 3 ergibt sich die gleiche generelle Geometrie des Dichtrings 1 dahingehend, dass ein oberer Dichtringbereich 12 vorgesehen ist, welcher den oberen Profilbereich 30 und die erste Hälfte des Mittelkanals 34 umfasst, sowie einen oberen Stegbereich 60. Weiterhin ist ein unterer Bereich 14 vorgesehen, welcher entsprechend den unteren Profilbereich 32 und ebenfalls einen Teil des Mittelkanals 34 umfasst, sowie einen unteren Stegbereich 62.

Diese Lösung hat fertigungstechnische Vorteile, dahingehend, dass die jeweiligen Profile der Dichtringbereiche 12, 14 im Wesentlichen ohne Hinterschnitt hergestellt werden können und entsprechende Werkzeuge zur Herstellung der Profile einfacher aufgebaut sein können.

Der obere Dichtringbereich 12 und der untere Dichtringbereich 14 des Dichtrings 1 müssen dabei nicht zwangsläufig miteinander stoffschlüssig oder auf andere Weise verbunden werden, es reicht - je nach Toleranz der Aufnahmenut - den oberen Profilbereich 30 und den unteren Profilbereich 32 gemeinsam in die geschlossene Gehäusenut einzulegen und auf diese Weise, auch durch das Anliegen des oberen Stegbereiches 60 und des unteren Stegbereiches 62 aufeinander, eine zuverlässige Abdichtung des Mittelkanals 34 nach außen hin zu erreichen.

Entsprechend kann ein Dichtring 1 bereitgestellt werden, welcher in vorteilhafter Weise auch in eine geschlossene Gehäusenut, so wie sie beispielsweise im Bereich einer Hülse eines Mediendrehverteilers vorliegt, eingelegt werden kann, ohne dass der Dichtring 1 beim Montieren beschädigt wird. Dies wird durch die Bereiche reduzierten Radius 4 erreicht, welche eine erhöhte Flexibilität in der Ebene des Dichtrings 1 bereitstellen. Weiterhin kann durch die Bereiche reduzierten Radius 4 eine Verdrehsicherung in der Gehäusenut bereitgestellt werden, welche entweder über das Vorsehen eines Stiftes oder aber durch das Bereitstellen einer zu den Bereichen reduzierten Radius des Dichtrings 1 komplementären Struktur in der Gehäusenut bewerkstelligt wird.

Weiterhin kann beim Vorsehen von Bereichen reduzierten Radius in unterschiedlicher Abfolge um den Umfang des Dichtrings 1 herum bewirkt werden, dass der Dichtring 1 nur in einer eineindeutigen Orientierung in die jeweilige Gehäusenut eingelegt werden kann, so dass beispielsweise das Anbinden einer Spül- und Leckagebohrung 7 an das Bauteil problemlos sichergestellt wird.

In der Figur 4 ist der Dichtring 1 in einer eingebauten Situation gezeigt. Dabei ist der Dichtring 1 in einem Gehäuse 8 aufgenommen, welches einen Nutbereich 80 aufweist, in welchem die jeweiligen hervorstehenden Elemente 40 des Dichtrings 1 aufgenommen werden können. Der Nutbereich 80 kann dabei in einer durchgehenden Tiefe ausgearbeitet sein, so dass alle hervorstehenden Elemente 40 in dem Nutbereich 80 aufgenommen werden können. In den Bereichen reduzierten Radius 4 liegt der Dichtring 1 dann nicht an dem Material des Gehäuses 8 an, sodass in diesen Bereichen jeweils Hohlräume entstehen.

In einer bevorzugten Ausbildung ist der Nutbereich 80 komplementär zu der Form des Dichtrings 1 und insbesondere komplementär zu der Anordnung der hervorstehenden Elemente 40 ausgebildet. Mit anderen Worten weist der Nutbereich 80 in den Bereichen reduzierten Radius 4 des Dichtrings eine geringere oder überhaupt keine Nuttiefe auf und in den Positionen der hervorstehenden Elemente 40 des Dichtrings 1 mindestens eine dazu komplementäre Nuttiefe. Damit kann eine verbesserte Anlage des Dichtrings 1 an dem Material des Gehäuses 8 erreicht werden.

Bei einer besonders exakten Ausführung des auf diese Weise komplementär ausgebildeten Nutbereichs 80 kann der Dichtring 1 im Bereich seiner hervorstehenden Elemente 40 und im Bereich reduzierten Radius 4 im Wesentlichen vollflächig am Material des Gehäuses 8 anliegen. Auf diese Weise ergibt sich eine effektive Verdrehsicherung für den Dichtring 1, da die jeweiligen Flanken 42 der hervorstehenden Elemente 40 jeweils an dazu komplementären Bereichen des Nutbereichs 80 des Gehäuses 8 anliegen. Auf diese Weise kann auch eine eineindeutige Ausrichtung des Dichtrings in dem Gehäuse 8 erreicht werden, wenn die hervorstehenden Elemente 40 eine unterschiedliche Ausdehnung in Umfangsrichtung aufweisen. Auf diese Weise kann quasi eine *"Schlüssel-Schloss"* Ausbildung erreicht werden, mit welcher die jeweiligen Dichtringe 1 in einer eineindeutigen Lage in dem Nutbereich 80 des Gehäuses 8 aufgenommen werden können.

Diese Ausbildung kann weiterhin auch dazu verwendet werden, über unterschiedliche Erstreckungen der hervorstehenden Elemente 40 in Umfangsrichtung eine Codierung des Dichtungstyps vorzunehmen, so dass schlussendlich nur diejenigen Dichtringe 1 in dem jeweiligen Nutbereich 80 des Gehäuses 8 aufgenommen werden können, welche auch dafür geeignet und entsprechend codiert sind.

In der Figur 4 exemplarisch auf der linken Seite der Figur gezeigt ist weiterhin das Bereitstellen eines X-Rings 82, welcher auf den oberen Dichtringbereich 12 wirkt und diesen entsprechend in radialer Richtung nach innen vorspannt. Weiterhin ist ein aufblasbarer O-Ring 84 gezeigt, welcher auf den unteren Dichtringbereich 14 wirkt und diesen entsprechend in radialer Richtung nach innen vorspannt. Der Dichtring 1 kann auch mit zwei O-Ringen 84 oder zwei X-Ringen 82 radial vorgespannt werden. Die Kombination aus O-Ring 84 und X-Ring 82 kann auch umgekehrt ausgeführt werden.

Eine Verdrehsicherung 86 in Form eines Bolzens oder Stifts kann ebenfalls vorgesehen sein derart, das die Verdrehsicherung 86 zwischen zwei Flanken 42 nebeneinander liegender hervorstehender Elemente 40 liegt und damit ein Verdrehen des Dichtrings 1 im Nutbereich 80 verhindert.

Der Dichtring 1 ist im oberen Dichtungsbereich 12 und im unteren Dichtungsbereich 14 jeweils auf der Außenseite mit einer Fase 16 versehen, die zum einen das Montieren des Dichtrings 1 erleichtert und zum anderen die Dauerhaltbarkeit verbessert, da die Kerbwirkung verringert wird.

Auf der rechten Seite der Figur 4 ist entsprechend die jeweilige Form des Dichtrings 1 im Bereich der Fase 16 in seiner Fertigungsgeometrie 160 und in seinem eingebauten Zustand 162 gezeigt.

Im Dichtring 1 ist schematisch eine sich drehende Welle 9 gezeigt, die mittels des Dichtrings 1 gegenüber dem Gehäuse 8 abgedichtet wird.

Die Welle 9 kann dabei beispielsweise eine Welle eines Mediendrehverteilers in einer Getränkeabfüllanlage sein und das Gehäuse 8 eine Hülse des Mediendrehverteilers. Mittels des Dichtrings 1 können beispielsweise die einzelnen Verteilkanäle des Mediendrehverteilers gegeneinander abgedichtet werden.

Die Welle 9 kann auch eine Drehwelle eines in einem Isolator angeordneten Füllerkarussells zur aseptischen Abfüllung von Getränken sein. Die Welle 9 wird dann mittels des Dichtrings 1 gegenüber dem als Isolator ausgebildeten Gehäuse 8 abgedichtet.

Soweit anwendbar können alle einzelnen Merkmale, die in den einzelnen Anführungsbeispielen dargestellt sind, miteinander kombiniert und/oder ausgetauscht werden, ohne den Bereich der Erfindung zu verlassen.

### Bezugszeichenliste

- 1: Dichtring
- 10: Verformungsposition
- 12: oberer Dichtringbereich
- 14: unterer Dichtringbereich
- 16: Fase
- 160: Fertigungsgeometrie
- 162: Geometrie im eingebauten Zustand
- 2: Dichtungsgrundkörper
- 3: Verschleißprofil
- 30: oberer Profilbereich
- 32: unterer Profilbereich
- 34: Mittelkanal
- 4: Bereich reduzierten Radius
- 40: hervorstehendes Element
- 42: Flanke
- 5: Verformungsbereich
- 6: Steg
- 60: oberer Stegbereich
- 62: unterer Stegbereich
- 7: Spül- und Leckagebohrung
- 8: Gehäuse
- 80: Nutbereich
- 82: X-Ring
- 84: O-Ring
- 86: Verdrehsicherung
- 9: Welle
- A: Mitte des Dichtrings
- R₁: Radius des Dichtrings
- R₂: Radius des Bereichs reduzierten Radius
- D: Dicke des Dichtungsgrundkörpers
- H_{S}: Höhe des Stegs
- H_{D}: Höhe des Dichtrings

## Patentansprüche

1. Dichtring (1) zur Abdichtung eines sich gegenüber einem ersten Bauteil drehenden zweiten Bauteils, bevorzugt zur Abdichtung eines Verteilkanals eines Mediendrehverteilers in einer Getränkeabfüllanlage, umfassend einen ringförmigen Dichtungsgrundkörper (2) zur Aufnahme an dem ersten Bauteil und ein radial innerhalb des Dichtungsgrundkörpers (2) angeordnetes Verschleißprofil (3) zur abdichtenden Anlage an dem zweiten Bauteil,
**dadurch gekennzeichnet, dass**
der Dichtungsgrundkörper (2) mindestens einen Bereich reduzierten Radius (4) aufweist, um eine Verformung des Dichtungsgrundkörpers (2) bei der Montage mit dem ersten Bauteil zu ermöglichen, wobei der Bereich reduzierten Radius (4) so auf der Außenseite des Dichtungsgrundkörpers (2) vorgesehen ist, dass der Dichtungsgrundkörper (2) im Bereich reduzierten Radius (4) in Radiusrichtung schmaler als in den benachbarten Bereichen ausgeprägt ist.

2. Dichtring (1) gemäß Anspruch 1, **dadurch gekennzeichnet, dass** eine Mehrzahl von Bereichen (4) reduzierten Radius um den Umfang des Dichtungsgrundkörpers (2) herum vorgesehen sind.

3. Dichtring (1) gemäß Anspruch 1 oder 2, **dadurch gekennzeichnet, dass** in einem Verformungsbereich (5) eine höhere Anzahl an Bereichen reduzierten Radius (4) um den Umfang des Dichtungsgrundkörpers (2) herum angeordnet sind, als außerhalb des Verformungsbereiches (5).

4. Dichtring (1) gemäß einem der vorstehenden Ansprüche, **dadurch gekennzeichnet, dass** der Dichtungsgrundkörper (2) einen radial nach außen weisenden und den Dichtungsgrundkörper (2) im Wesentlichen umschließenden Steg (6) aufweist, wobei die Bereiche reduzierten Radius (4) in den Steg (6) eingebracht sind.

5. Dichtring (1) gemäß einem der vorstehenden Ansprüche, **dadurch gekennzeichnet, dass** das Verschleißprofil (3) einen oberen Profilbereich (30), einen unteren Profilbereich (32) und dazwischen einen Mittelkanal (34) aufweist, welcher bei Anlage des Verschleißprofils (3) an dem zweiten Bauteil durch den oberen Profilbereich (30) und den unteren Profilbereich (32) fluiddicht abgedichtet ist.

6. Dichtring (1) gemäß Anspruch 5, **dadurch gekennzeichnet, dass** der Mittelkanal (34) über mindestens eine Spül- und Leckagebohrung (7), welche sich im Wesentlichen radial durch das Verschleißprofil (3) und den Dichtungsgrundkörper (2) hindurcherstreckt, kontaktierbar ist.

7. Dichtring (1) gemäß einem der vorstehenden Ansprüche, **dadurch gekennzeichnet, dass** Bereiche reduzierten Radius (4) eine unterschiedliche Erstreckung in Umfangsrichtung aufweisen.

8. Dichtring (1) gemäß einem der vorstehenden Ansprüche, **dadurch gekennzeichnet, dass** hervorstehende Elemente (40) zwischen den Bereichen reduzierten Radius (4) in Umfangsrichtung eine unterschiedliche Erstreckung aufweisen.

9. Dichtring (1) gemäß einem der vorstehenden Ansprüche, **dadurch gekennzeichnet, dass** ein oberer Bereich (12) des Dichtrings (1) vorgesehen ist, welcher mit einem unteren Bereich (14) des Dichtrings (1) gemeinsam den Dichtring (1) ausbildet.

10. Dichtring (1) gemäß einem der vorstehenden Ansprüche, **dadurch gekennzeichnet, dass** der Dichtungsgrundkörper (2) zur Erzeugung einer Vorspannung auf das Verschleißprofil (3) elastisch ausgebildet ist oder ein aktives Vorspannelement aufweist, beispielsweise einen aufblasbaren Schlauch.

11. Mediendrehverteiler mit einem feststehenden Bauteil und einem sich gegenüber dem feststehenden Bauteil drehenden Bauteil, wobei an dem einen Bauteil eine Gehäusenut zur Aufnahme eines Dichtrings (1) nach einem der Ansprüche 1 bis 10 vorgesehen ist,
**dadurch gekennzeichnet, dass**
dass die Gehäusenut eine zur Form des Dichtungsgrundkörpers (2) komplementäre Form aufweist.

## Claims

1. Sealing ring (1) for sealing a second component rotating against a first component, preferably for sealing a distribution channel of a rotary media distributor in a beverage filling machinery, comprising an annular sealing base body (2) for the reception on the first component and a wear profile (3) disposed radially within the sealing base body (2) for the sealing abutment on the second component,
**characterised in that**
the sealing base body (2) has at least one region of reduced radius (4) in order to enable a deformation of the sealing base body (2) at the installation with the first component, wherein the region of reduced radius (4) is provided on the outer side of the sealing base body (2) such that the sealing base body (2) in the region of reduced radius (4) is narrower in radius direction than in the adjacent regions.

2. Sealing ring (1) according to claim 1, **characterised in that** a plurality of regions (4) of reduced radius are provided around the circumference of the sealing base body (2).

3. Sealing ring (1) according to claim 1 or 2, **characterised in that** in a deformation region (5) are disposed a larger number of regions of reduced radius (4) around the circumference of the sealing base body (2) than outside the deformation region (5).

4. Sealing ring (1) according to any of the preceding claims, **characterised in that** the sealing base body (2) has a web (6) pointing radially to the outside and substantially enclosing the sealing base body (2), wherein the regions of reduced radius (4) are incorporated into the web (6).

5. Sealing ring (1) according to any of the preceding claims, **characterised in that** the wear profile (3) has an upper profile region (30), a lower profile region (32) and therebetween a middle channel (34), which upon abutment of the wear profile (3) on the second component is sealed in a fluid-type manner by the upper profile region (30) and the lower profile region (32).

6. Sealing ring (1) according to claim 5, **characterised in that** the middle channel (34) can be contacted via at least one rinsing and leakage bore (7) which extends substantially radially through the wear profile (3) and the sealing base body (2).

7. Sealing ring (1) according to any of the preceding claims, **characterised in that** regions of reduced radius (4) have a varied extension in circumferential direction.

8. Sealing ring (1) according to any of the preceding claims, **characterised in that** protruding elements (40) between the regions of reduced radius (4) have in circumferential direction a varied extension.

9. Sealing ring (1) according to any of the preceding claims, **characterised in that** an upper region (12) of the sealing ring (1) is provided which forms the sealing ring (1) together with a lower region (14) of the sealing ring (1).

10. Sealing ring (1) according to any of the preceding claims, **characterised in that** the sealing base body (2) is formed elastically to generate a bias onto the wear profile (3) or has an active bias element, for example an inflatable hose.

11. Rotary media distributor having a fixed component and a component which rotates against the fixed component, wherein on the one component is provided a housing groove for the reception of a sealing ring (1) according to any of claims 1 to 10,
**characterised in that**
that the housing groove has a form complementary to the form of the sealing base body (2).

## Revendications

1. Bague d'étanchéité (1) pour l'étanchéification d'un deuxième composant tournant par rapport à un premier composant, de préférence pour l'étanchéification d'un canal de distribution d'un distributeur rotatif de milieu dans une installation de soutirage de boisson, comprenant un corps de base d'étanchéité (2) annulaire pour la réception au niveau du premier composant et un profil d'usure (3) agencé radialement à l'intérieur du corps de base d'étanchéité (2) pour l'application étanche sur le deuxième composant,
**caractérisée en ce que**
le corps de base d'étanchéité (2) présente au moins une zone de rayon réduit (4) pour permettre une déformation du corps de base d'étanchéité (2) lors du montage avec le premier composant, dans laquelle la zone de rayon réduit (4) est prévue sur le côté extérieur du corps de base d'étanchéité (2) de sorte que le corps de base d'étanchéité (2) est plus étroit dans la zone de rayon réduit (4) dans la direction radiale que dans les zones adjacentes.

2. Bague d'étanchéité (1) selon la revendication 1, **caractérisée en ce qu'**une pluralité de zones (4) de rayon réduit sont prévues autour de la circonférence du corps de base d'étanchéité (2).

3. Bague d'étanchéité (1) selon la revendication 1 ou 2, **caractérisée en ce qu'**un plus grand nombre de zones de rayon réduit (4) est agencé autour de la circonférence du corps de base d'étanchéité (2) dans une zone de déformation (5) qu'à l'extérieur de la zone de déformation (5).

4. Bague d'étanchéité (1) selon l'une quelconque des revendications précédentes, **caractérisée en ce que** le corps de base d'étanchéité (2) présente une nervure (6) orientée radialement vers l'extérieur et entourant sensiblement le corps de base d'étanchéité (2), dans laquelle les zones de rayon réduit (4) sont ménagées dans la nervure (6).

5. Bague d'étanchéité (1) selon l'une quelconque des revendications précédentes, **caractérisée en ce que** le profil d'usure (3) présente une zone de profil supérieure (30), une zone de profil inférieure (32) et un canal médian (34) entre, lequel est rendu étanche de manière étanche aux fluides lors de l'application du profil d'usure (3) sur le deuxième composant par la zone de profil supérieure (30) et la zone de profil inférieure (32).

6. Bague d'étanchéité (1) selon la revendication 5, **caractérisée en ce que** le canal médian (34) peut être mis en contact par le biais d'au moins un alésage de rinçage et de fuite (7), lequel s'étend sensiblement radialement à travers le profil d'usure (3) et le corps de base d'étanchéité (2).

7. Bague d'étanchéité (1) selon l'une quelconque des revendications précédentes, **caractérisée en ce que** des zones de rayon réduit (4) présentent une extension différente dans la direction circonférentielle.

8. Bague d'étanchéité (1) selon l'une quelconque des revendications précédentes, **caractérisée en ce que** des éléments en saillie (40) entre les zones de rayon réduit (4) présentent une extension différente dans la direction circonférentielle.

9. Bague d'étanchéité (1) selon l'une quelconque des revendications précédentes, **caractérisée en ce qu'**une zone supérieure (12) de la bague d'étanchéité (1) est prévue, laquelle forme conjointement avec une zone inférieure (14) de la bague d'étanchéité (1) la bague d'étanchéité (1).

10. Bague d'étanchéité (1) selon l'une quelconque des revendications précédentes, **caractérisée en ce que** le corps de base d'étanchéité (2) est réalisé de manière élastique pour la génération d'une précontrainte sur le profil d'usure (3) ou présente un élément de précontrainte actif, par exemple un tuyau gonflable.

11. Distributeur rotatif de milieu avec un composant fixe et un composant rotatif par rapport au composant fixe, dans lequel il est prévu au niveau de l'un composant une rainure de boîtier pour la réception d'une bague d'étanchéité (1) selon l'une quelconque des revendications 1 à 10,
**caractérisé en ce que**
**que** la rainure de boîtier présente une forme complémentaire à la forme du corps de base d'étanchéité (2).
